(19) Europäisches Patentamt
European Patent Office
Office européen des brevets

(11) Publication number: **0 103 940**
**A1**

# (12) EUROPEAN PATENT APPLICATION

(21) Application number: 83302704.8

(22) Date of filing: 12.05.83

(51) Int. Cl.³: C 01 G 31/04
F 27 B 15/12

(30) Priority: 16.08.82 US 408396

(43) Date of publication of application: 28.03.84 Bulletin 84/13

(84) Designated Contracting States: BE DE FR GB IT NL

(71) Applicant: STAUFFER CHEMICAL COMPANY
Westport Connecticut 06880(US)

(72) Inventor: Jacob, Kiriyanthan A.
2757 Byrnwyck West
Maumee Ohio 43537(US)

(74) Representative: Wain, Christopher Paul et al,
A.A. THORNTON & CO. Northumberland House 303-306
High Holborn
London WC1V 7LE(GB)

## (54) Process for preparing vanadium halides.

(57) Vanadium halides or oxyhalides are prepared by reacting vanadium oxyhalides or pentoxide with a halogen in the presence of activated carbon at an elevated temperature in a fluidised bed reactor, and thereafter separating the vanadium halide or oxyhalide from the other reaction products, the reaction being conducted in a fluidised bed reactor equipped with internal filters to prevent carryover of entrained solids with the vanadium halide or oxyhalide.

EP 0 103 940 A1

./...

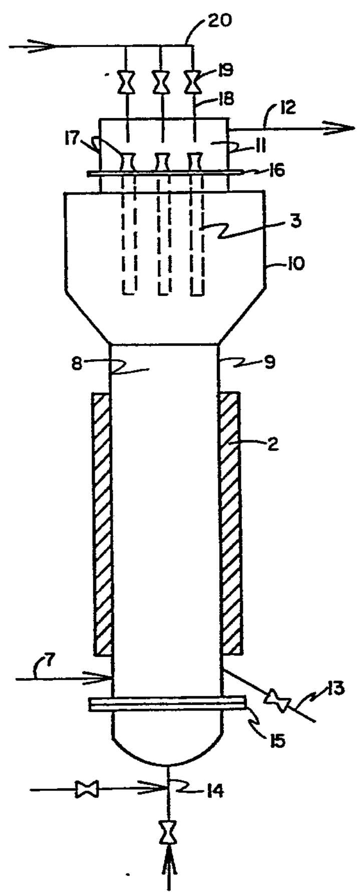


FIG. 2

# PROCESS FOR PREPARING VANADIUM HALIDES

The present invention relates to a process for preparing vanadium halides or vanadium oxyhalides and more particularly (but not exclusively) to an improved process for preparing vanadium chloride or oxychloride in a fluidised bed reactor.

Vanadium halides, and more particularly vanadium oxytrihalides, have been prepared by reacting organic halide vapours with vanadium compounds. British Patent No. 897,187, for example, describes a process for preparing vanadium oxychloride by passing dry chlorine gas over a mixture of finely-divided vanadium pentoxide and lampblack.

Also, U.S. Patent No. 3,591,525 to Markham et al describes a process for preparing a catalyst consisting of a glass of vanadium pentoxide and potassium pyrosulphate absorbed by silica gel particles, which comprises introducing a preheated mixture of silica gel particles and particles of the glass into a fluidised bed reactor equipped with filters at the top of the reactor, where the particles are rapidly heated to a temperature of between 300 and 400°C at which the glass vanadium pentoxide and potassium pyrosulphate melts and impregnation of the silica gel occurs.

U.S. Patent No. 2,698,330 to Fugate et al describes a process for preparing phthalic anhydride in a fluidised bed reactor in which a naphthalene-air mixture is introduced into the base of a fluidised bed reactor containing supported vanadium pentoxide where the naphthalene is partially oxidised with the formation of a major proportion

of phthalic anhydride and minor quantities of maleic anhydride. The resultant mixture which may contain finely divided catalyst passes from the top of the reactor into a separation zone containing a filter element. The catalyst is separated by passage of the gases through the filter after which they leave the reactor where the phthalic anhydride is removed.

Fluidised bed reactors equipped with high-temperature filtration apparatus to remove particles from the fluidising gas discharging from the bed are described in U.S. Patent No. 4,161,389 to Staffin et al. In these reactors, particles which are entrained in the discharging stream are collected on the filter units as the discharging stream passes therethrough. The filter units are cleaned periodically with compressed gas.

In preparing vanadium compounds such as vanadium oxytrichloride from vanadium pentoxide and activated carbon, it has been found that the process is very inefficient because the vanadium pentoxide is lost from the fluid bed by elutriation and accumulates as sludge in the still and in the crude storage tank. Also, removing and disposing of the sludge from the still and crude storage tank presents a hazardous disposal problem.

We have now devised a process for preparing vanadium halides and oxyhalides in a fluidised bed reactor whereby the vanadium halides and oxyhalides can be obtained substantially free of impurities, more efficiently.

According to the invention, there is provided a process for preparing vanadium halides or oxyhalides, which comprises reacting a vanadium compound selected from vanadium oxyhalides and vanadium pentoxide, with a halogen in the presence of carbon particles in a fluidised bed reactor, characterised in that the reaction is conducted in a fluidised bed reactor containing gas-permeable filter elements which are maintained at a temperature such that the vanadium halide or oxyhalide products are in the vapour state.

In one example of the process of this invention, vanadium pentoxide is reacted with chlorine gas in the presence of activated carbon in a fluidised bed reactor equipped with internal filters, at a temperature of from about 300°C to 400°C, more preferably at about 325°C to 375°C, to form vanadium oxytrichloride. The vanadium oxytrichloride is separated from other entrained solids such as vanadium pentoxide and carbon particles by passing the vanadium oxytrichloride vapours through the internal filter elements in the reactor into a condenser where they are condensed and collected. The entrained solids in the vapour stream are collected on the filter elements and then at periodic intervals blown back into the reactor.

The reaction may be represented by the following equation:

$$V_2O_5 + 3\ Cl_2 + 1.5C \longrightarrow 2\ VOCl_3 + 1.5\ CO_2 \ .$$

In another embodiment of this invention, vanadium oxytrichloride is reacted with chlorine gas in the presence of activated carbon in a fluidised bed reactor equipped with internal filters, at a temperature of from about 600°C to about 700°C, to form vanadium tetrachloride. The vanadium tetrachloride vapours are separated from carbon particles by passing the vanadium tetrachloride through internal filters in the reactor into a condenser where they are condensed and collected.

The reaction may be represented by the following equation:

$$2\ VOCl_3 + 2\ Cl_2 + C \longrightarrow 2\ VCl_4 + Cl_2 + CO_2 \ .$$

The invention will be further illustrated with reference to the accompanying drawings which diagrammatically show the preferred processes for preparing vanadium chloride and oxytrichloride.

In order that the invention may be more fully

understood, reference is made to the accompanying drawings, in which:

FIGURE 1 illustrates diagrammatically one form of apparatus for preparing vanadium halides or oxyhalides; and

FIGURE 2 is a diagrammatic view of the fluid bed reactor.

In preparing vanadium oxytrichloride, vanadium pentoxide is preferably mixed with carbon particles in a closed storage tank (1) and the mixture containing vanadium pentoxide and carbon particles is introduced into fluidised bed reactor (2) through feed line (7). The feed tank (1), is preferably equipped with a means for pressurising the tank with an inert gas. Any inert gas may be employed to transfer the vanadium pentoxide-carbon mixture from feed tank (1) to the fluidised bed reactor (2). Examples of suitable inert gases which may be employed are nitrogen, argon, helium, carbon dioxide, and air which is substantially free of moisture.

Although it is preferred that the vanadium pentoxide and carbon be mixed prior to introduction into the fluidised bed reactor (2), the vanadium pentoxide and carbon particles may be added separately to the reactor.

The fluidised bed reactor (2) comprises a chamber (8) defined by a sidewall (9), an expansion chamber (10) and a dome (11) which is connected to discharge line (12) through which vanadium oxytrichloride is discharged to condenser (4). The fluidised bed reactor (2) is capable of fluidising and uniformly heating granular solids from ambient temperature up to about 700$^{o}$C using electrical or full fired heating means. The fluidised bed reactor (2) is equipped with port (13) through which the fluidised bed may be removed to maintain the desired bed height. Also, the reactor (2) is equipped with a high temperature filter system (3) which prevents particulate fines of vanadium pentoxide and carbon from discharging with the vanadium oxytrichloride to the

condenser (4) through discharge line (12).

The fluidised bed reactor (2) is equipped with an inlet (14) through which chlorine gas is introduced into reactor (2) at a point at or near the bottom of reactor (2) and below distributor plate (15) through which the chlorine gas diffuses upward through the bed of carbon and vanadium pentoxide. It is preferred that the chlorine gas be passed into the reactor containing carbon particles and vanadium pentoxide at such a rate that the carbon particles and vanadium pentoxide will be fluidised and maintained in a buoyant state.

The fluidised gas leaving chamber (8) of reactor (2) contains some entrained particles, often termed fines, which consist of carbon particles and unreacted vanadium pentoxide as well as chlorine gas and reaction products. The fluidised gas, together with the entrained solids and reaction products enters expansion chamber (10) which contains filter elements (3) and then flows through the filter elements from the exterior to the interior into dome (11) where it is discharged through line (12) into condenser (4). The entrained solids are removed from the fluidised gas and collected on the exterior surface of the filter elements (3).

The filter elements (3) consist of a plurality of gas-permeable tubes which are resistant to corrosion. These filter elements may be fabricated from, for example, stainless steel, monel, inconel, platinum, and ceramics. These tubes which are closed at the bottom and open at the top are generally mounted at the top in a manifold plate (16) within dome (11).

The filter elements (3) extend through manifold plate (16) and at their upper ends are tapered to form venturi (17). Lines (18) which contain flow control valves (19) extend through dome (11) down to venturi (17) for reversing the flow of gas through porous filters (3). It

is preferred that lines (18) extend down to within about one inch (2.54 cm) of venturi (17). When the solids build-up on filters (3) becomes so great that a pressure drop occurs across the filters, then the filters are cleaned by reversing the flow of gas through one or more of the porous filter elements. This may be achieved by, for example, opening flow-control valve (19) in line (18) connected to line (20) through which a high pressure inert gas is introduced. One or more filters may be cleaned at a time by opening-flow control valves (19) in lines (18) to force gas through the filters and into chamber (10).

The solids are blown from the exterior surface of the filters (3) into chamber (10) where they fall counter to the flow of fluidised gas into reactor (2) for further reaction.

In operating the process of this invention, one or more of the filter elements (3) may be cleaned by forcing an inert gas through line (18) under pressure into venturi (17).

The vanadium oxytrichloride vapours are discharged through line (12) to the base of condenser (4) where the vapours are cooled to form liquid vanadium oxytrichloride and then passed into storage tank (5). The uncondensed gases which pass through condenser (4) are transferred through line (21) to a scrubber.

The vanadium oxytrichloride collected in storage tank (5) is purified by transferring the material through line (22), valve (23) and line (24) into distillation apparatus (6), where the purified vanadium oxytrichloride is recovered.

The fluidised bed reactor may be used continuously without any carry over of entrained solids consisting of vanadium pentoxide and carbon particles. In addition, the process reduces pollution of the atmosphere and substantially enhances purification of the vanadium oxytrichloride.

The process described above may also be used to prepare vanadium tetrachloride. In this process carbon particles are added to reactor (2) through line (7) to a height of from about 10 to 20 inches. Vanadium oxytrichloride vapours and chlorine gas may be combined in line (14) and introduced into reactor (2) below distributor plate (15), or they may be introduced into reactor (2) through separate lines. The amount of chlorine gas introduced into reactor (2) is about 5 percent in excess of the stoichiometric amount required for the reaction.

The vanadium tetrachloride formed in the fluidised bed reactor passes upwards through reactor chamber (8) into into chamber (10) and through filter elements (3) into dome (11). The vanadium tetrachloride passes from dome (11) through line (12) to condenser (4) where it is liquidified and collected in tank (5). The vanadium tetrachloride can be transferred from tank 5 through lines (22), and 25 to a storage tank.

Filter elements (3), consisting of a plurality of gas-permeable tubes which are resistant to corrosion, separate vanadium tetrachloride from entrained particles such as carbon particles and also provide for increased residence time in the reactor.

The amount of chlorine gas employed in the preparation of the vanadium chlorides and oxychlorides will range from about the stoichiometric amount up to about 10 percent excess and more preferably about 5 percent by weight in excess of the stoichiometric amount required for the reaction. The excess chlorine may be recycled to reactor (2) or it may be transferred to a scrubber where it is treated with caustic.

The mole ratio of vanadium pentoxide to chlorine is not critical and may range from about 1:3 to 1:10 and more preferably from about 1:3.5 to about 1:4.

Likewise the mole ratio of vanadium oxytrichloride

to chlorine is not critical and may range from 1:1 up to 1:5 and more preferably from 1:1.5 to 1:2. It is preferred that the chlorine be employed in an amount which is about 5 weight percent in excess of the stoichiometric amount required for the reaction.

In addition to chlorine gas, other halogenated compounds may be employed in the process of this invention. Examples of such compounds are benzotrichloride, 1,4-bis-(trichloromethyl) benzene, trichloromethyl naphthalenes, bis(trichloromethyl) biphenyl, and trichloromethyl biphenyl.

Other halogenated vanadium compounds can be prepared using the process of this invention from the corresponding bromine and iodine derivatives.

The vanadium compounds prepared in accordance with the process of this invention may be used either alone or reacted with aluminum alkyls as catalysts for olefin polymerisations. Also, they may be used as intermediates in organovanadium synthesis.

The following examples further illustrate the process of this invention in which all parts are by weight unless otherwise specified.

EXAMPLE 1

An apparatus such as that illustrated in Figure 1 is used to prepare vanadium oxytrichloride in which a fluidised bed reactor is heated to a temperature of at least 350°C and a mixture containing carbon particles and vanadium pentoxide in a ratio of 1:10 is charged to the fluidised bed reactor (2) through feed line (7). The reactor and contents are maintained at a temperature above the vapourisation temperature of vanadium oxytrichloride. To the heated bed is introduced chlorine gas at a rate of about 5 percent by weight in excess of the stoichiometric amount required for the reaction. The gaseous chlorine passes upwardly through the bed at a sufficient velocity to maintain the bed in a fluidised state. This condition

may be controlled and maintained by the introduction of chlorine gas along with an inert gas. The temperature in reactor (2) is maintained in the range of from 300°C to about 400°C and the filter elements (3) at a temperature above about 130°C. The products of the reaction pass upwards through reactor (2) into chamber (10) and through filter elements (3) to condenser (4) where the vanadium oxytrichloride is condensed and collected in tank (5). The chlorine gas discharged from condenser (4), is passed through line (21) and recycled to reactor (2) or transferred to a scrubber where it is treated with caustic. The vanadium oxytrichloride may be transferred from tank (5) to distillation apparatus (6) where it is further purified.

When the filter elements (3) are maintained at a temperature above about 130°C, the fluidised bed reactor can be run continuously for at least seven days before the elements become plugged. However, when the temperature of the filter elements (3) fall below about 130°C, the elements become plugged after operating about one day.

Example 2

The process of Example 1 is repeated except that the fluidised bed reactor is heated to a temperature of from 350° to 400°C and the temperature of the filter elements (3) is maintained at a temperature of from 130° to 160°C. Vanadium pentoxide is fed into the fluidised bed reactor (2) at a rate of 30 pounds/hour along with carbon particles at a rate of 3 pounds/hour. Chlorine gas is fed into the bottom of the fluidised bed reactor (2) below the distributor plate (15) at the rate of 35 pounds/hour. The velocity through the filters is maintained at about 2 to 2.5 feet/minute. The fluid bed is maintained at a height of from about 15 to 18 inches, by either adding vanadium pentoxide and carbon particles or removing a portion of the bed through port (13). Vanadium oxytrichloride is recovered from the reactor at a rate of about 55 pounds/hour.

A yield of about 96 percent vanadium oxytrichloride is obtained.

Example 3

The process of Example (1) is repeated except that vanadium oxytrichloride is substituted for the vanadium pentoxide.

Carbon particles are fed through line (7) into reactor (2) to maintain a bed of from 15 to 18 inches in height above distributor plate (15) and vanadium oxytrichloride and chlorine gas are fed into reactor (2) below distributor plate (15). The vanadium oxytrichloride and chlorine gas are fed together through line (14) into the reactor (2) below the distributor plate (15). The gaseous chlorine, which is introduced at a rate of about 5 percent in excess of the stoichiometric amount required for the reaction, and vanadium oxytrichloride pass upwardly through the distributor plate and the carbon particles at a sufficient velocity to maintain the bed in a fluidised state. This condition may be controlled and maintained by the introduction of chlorine gas along with an inert gas. The temperature in reactor (2) is maintained above about 650°C and the filters at about 160°C. The vanadium tetrachloride, chlorine gas and carbon particles pass upwards through reactor (2) into chamber (10) where the carbon particles are separated from the vanadium tetrachloride and chlorine gas by filter elements (3). The vanadium tetrachloride and chlorine gas pass through filter elements (3) line (12) and into condenser (4) where the vanadium tetrachloride is condensed and collected in tank (5). The vanadium tetrachloride may be removed from tank (5) through lines (22) and (25).

The chlorine gas exiting from condenser (4) passes through line 21 where it may be recycled to reactor (2) or

transferred to a scrubber where it is treated with caustic.

Example 4

The process of Example (1) is repeated except that benzotrichloride is substituted for chlorine and carbon.

The benzotrichloride is heated to a temperature of about 215°C and introduced into the fluidised bed reactor (2).

CLAIMS:

1. A process for preparing vanadium halides or oxyhalides, which comprises reacting a vanadium compound selected from vanadium oxyhalides and vanadium pentoxide, with a halogen in the presence of carbon particles in a fluidised bed reactor, characterised in that the reaction is conducted in a fluidised bed reactor containing gas-permeable filter elements which are maintained at a temperature such that the vanadium halide or oxyhalide products are in the vapour state.

2. A process according to claim 1, wherein the fluidised bed reactor is maintained at a temperature of from 300 to 700°C.

3. A process according to claim 1 or 2, wherein a mixture consisting of the vanadium compound and carbon particles is added to the reactor.

4. A process according to claim 1 or 2, wherein the vanadium compound and the carbon particles are added separately to the reactor.

5. A process according to any of claims 1 to 4, wherein the filter elements have a means preferably a pressure means, for removing solids which collect on the elements.

6. A process according to any of claims 1 to 5, wherein one or more filter elements may be cleaned while continuing to filter through the other elements.

7. A process according to any of claims 1 to 6, wherein compressed inert gas is used to clean the filter elements.

8. A process according to any of claims 1 to 7, wherein the filter elements are maintained at a temperature of at least 130°C.

9. A process according to any of claims 1 to 8, wherein the vanadium compound is vanadium pentoxide or vanadium oxytrichloride and the halogen is chlorine.

10. A process according to any of claims 1 to 9, wherein the vanadium pentoxide and carbon are recycled into the reactor.

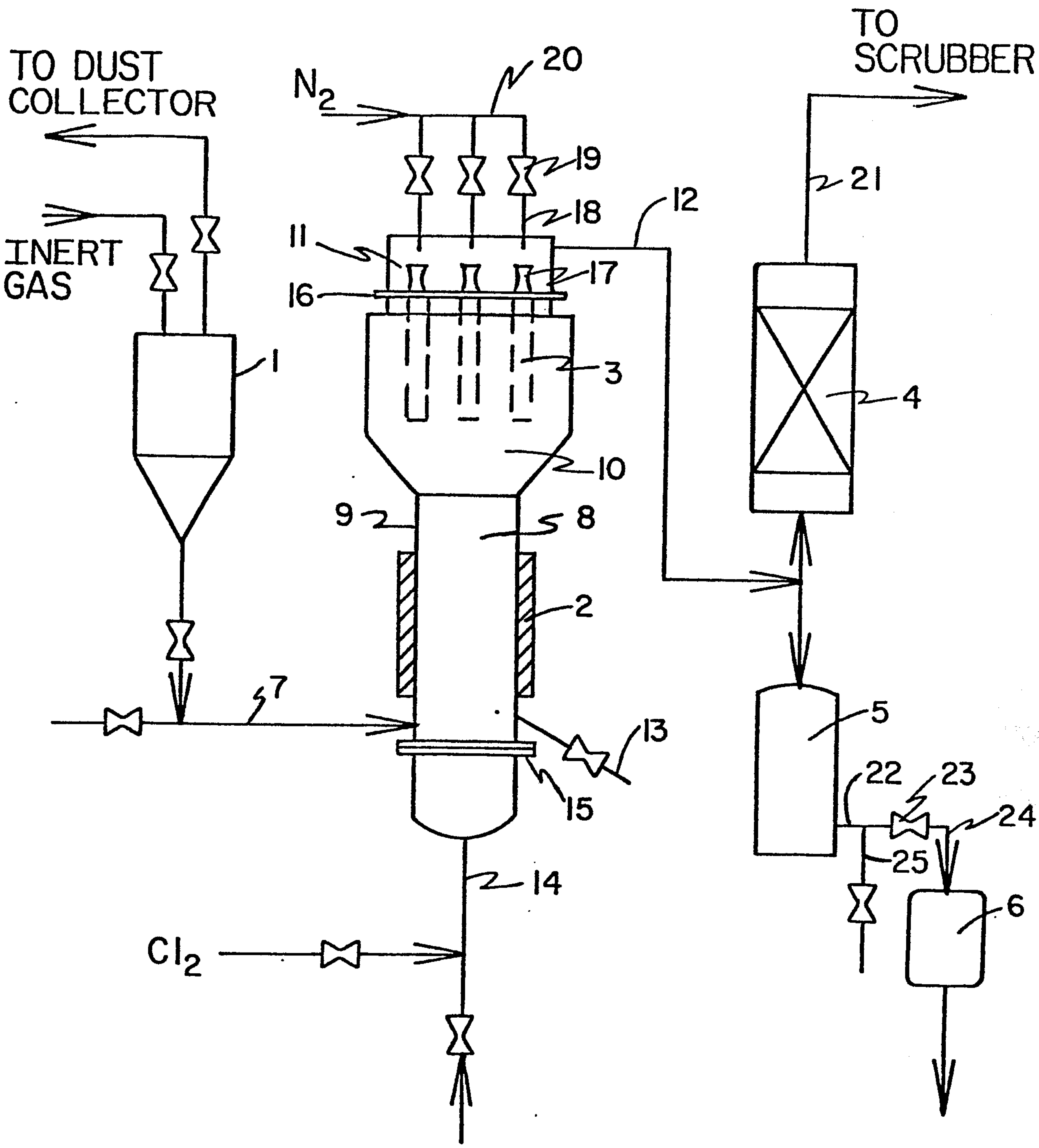
TO DUST COLLECTOR
INERT GAS
N2
20
19
18
11
17
16
12
TO SCRUBBER
21
1
3
4
10
9
8
2
7
13
15
14
Cl2
5
22
23
24
25
6

FIG. I

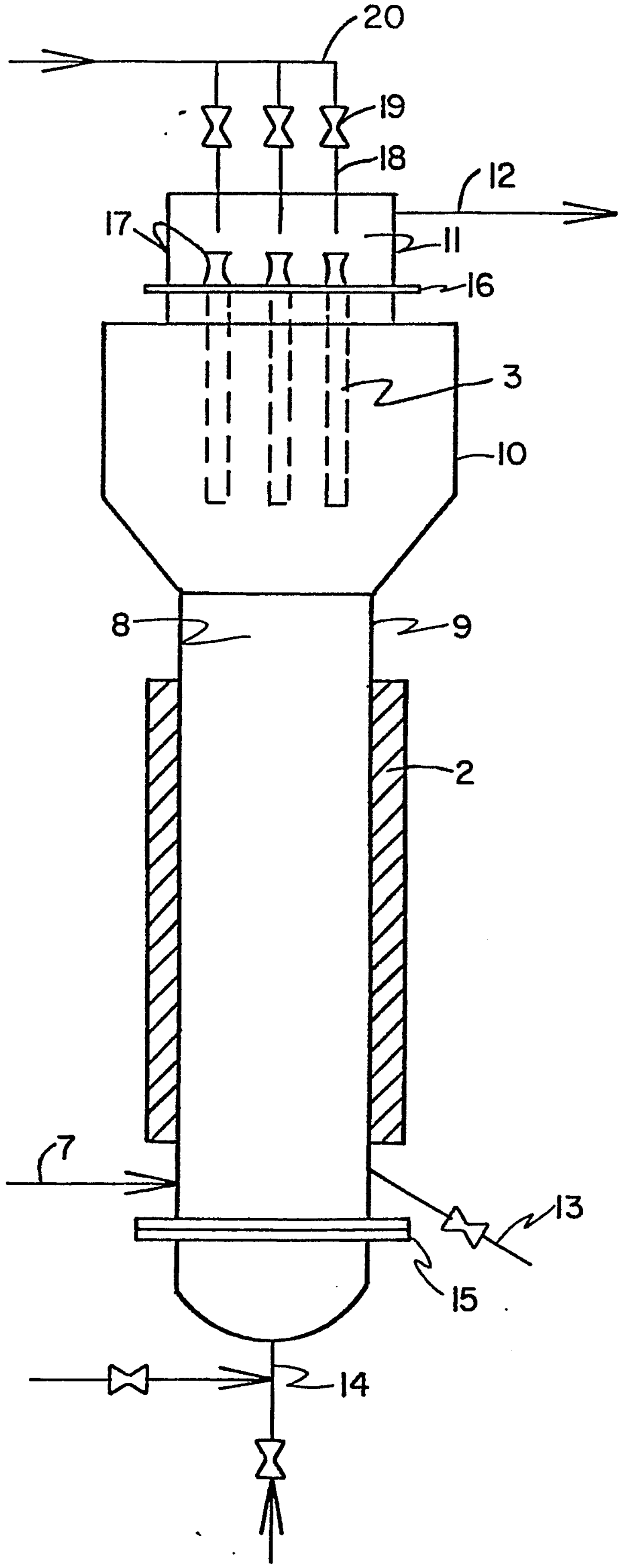


FIG. 2

0103940

European Patent Office

# EUROPEAN SEARCH REPORT

Application number

EP 83 30 2704

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | US-A-3 355 244 (T.R. CARTER et al.) * Claim 1 * --- | 1,2 | C 01 G 31/04<br>F 27 B 15/12 |
| Y | US-A-3 684 433 (F. LANGENHOFF et al.) * Claim 1 * --- | 1,2 | |
| Y,D | US-A-4 161 389 (H.K. STAFFIN et al.) * Claim 1 * --- | 1,2 | |
| Y | Patent Abstracts of Japan Vol. 4, no. 46 Page 116 C 6 & JP-A-55-20210 --- | 1,2 | |
| A | EP-A-0 003 436 (STAUFFER) --- | | TECHNICAL FIELDS SEARCHED (Int. Cl. 3) |
| A | DE-C-1 084 703 (DOW) ----- | | C 01 G 31/00<br>F 27 B 15/00 |

The present search report has been drawn up for all claims

| Place of search | Date of completion of the search | Examiner |
|---|---|---|
| BERLIN | 24-11-1983 | KESTEN W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82